# EUROPEAN PATENT APPLICATION

(11) **EP 3 487 023 A1**
(43) Date of publication of application: **22.05.2019**
(21) Application number: 18205768.7
(22) Date of filing: 12.11.2018
(51) Int. Cl.: H02H 9/00, H02H 9/04, H02H 9/06

(54) **FILTER CIRCUIT**

(30) Priority: 17.11.2017 TW 10640011
(71) Applicant: Pegatron Corporation, Taipei City 112 (TW)
(72) Inventor: Chi, CHANG, Taipei City 112 (TW)
(74) Representative: Haseltine Lake LLP

(57) **Abstract**

A filter circuit (100, 200, 300) includes a signal input terminal (TEI), a gas discharging tube (110), a signal output terminal (TEO, TEO1), and a filter (120, 220, 320). The signal input terminal (TEI) is configured to receive a communication signal (XSS). The gas discharging tube (110) is coupled between the signal input terminal (TEI) and a natural ground terminal (GNDn). The signal output terminal (TEO, TEO1) is configured to provide a filtered communication signal (XSSf, XSSfl). The filter (120, 220, 320) is coupled between the signal input terminal (TEI) and the signal output terminal (TEO, TLO1). The filter (120, 220, 320) includes a first high voltage capacitor (HVC1), a second high voltage capacitor (HVC2), and a main filter element (LX1). The first high voltage capacitor (HVC1) is coupled between the signal input terminal (TEI) and an electronic ground terminal (GNDe). The second high voltage capacitor (HVC2) is coupled between the signal output terminal (TEO, TEO1) and the electronic ground terminal (GNDe). The main filter element (LX1) is coupled between the signal input terminal (TEI) and the signal output terminal (TEO, TEO1).

## Description

### Technical Field

The disclosure relates to a filter circuit; more particularly, the disclosure relates to a filter circuit having an anti-surge capability.

### Description of Related Art

In a filter circuit, to solve surge problems, a conventional method is to adopt a transient voltage suppressor (TVS) diode or an electrostatic discharge (ESD) element. However, in order to effectively solve the surge problems, more TVS diodes or ESD elements are required, which leads to the increase in the hardware costs.

### SUMMARY

The disclosure provides a filter circuit which releases surges to the ground through a gas discharging tube and high voltage capacitors, so as to effectively solve the surge problems.

In an embodiment, a filter circuit includes a signal input terminal, a gas discharging tube, at least one signal output terminal, and at least one filter. The signal input terminal is configured to receive a communication signal. The gas discharging tube is coupled between the signal input terminal and a natural ground terminal. The at least one signal output terminal is configured to provide the communication signal that has been filtered. The at least one filter is coupled between the signal input terminal and the corresponding signal output terminal and includes a first sub-filter. The first sub-filter includes a first high voltage capacitor, a second high voltage capacitor, and a main filter element. The first high voltage capacitor is coupled between the signal input terminal and an electronic ground terminal. The second high voltage capacitor is coupled between the corresponding signal output terminal and the electronic ground terminal. The main filter element is coupled between the signal input terminal and the corresponding signal output terminal.

As known above, the exemplary filter circuit of the present invention forms a first discharging path of the surge to the ground through the gas discharging tube, and forms a second discharging path of the surge to the ground through the high voltage capacitors. Through multiple discharging paths, the surge problems may be effectively solved.

To make the aforementioned features and advantages of the disclosure more comprehensible, several embodiments accompanied with drawings are described in detail as follows.

### BRIEF DESCRIPTION OF THE DRAWINGS

FIG. 1 illustrates schematic diagram of a filter circuit according to a first embodiment of the disclosure.
FIG. 2 illustrates schematic diagram of a filter circuit according to a second embodiment of the disclosure.
FIG. 3 illustrates schematic diagram of a filter circuit according to a third embodiment of the disclosure.

### DESCRIPTION OF THE EMBODIMENTS

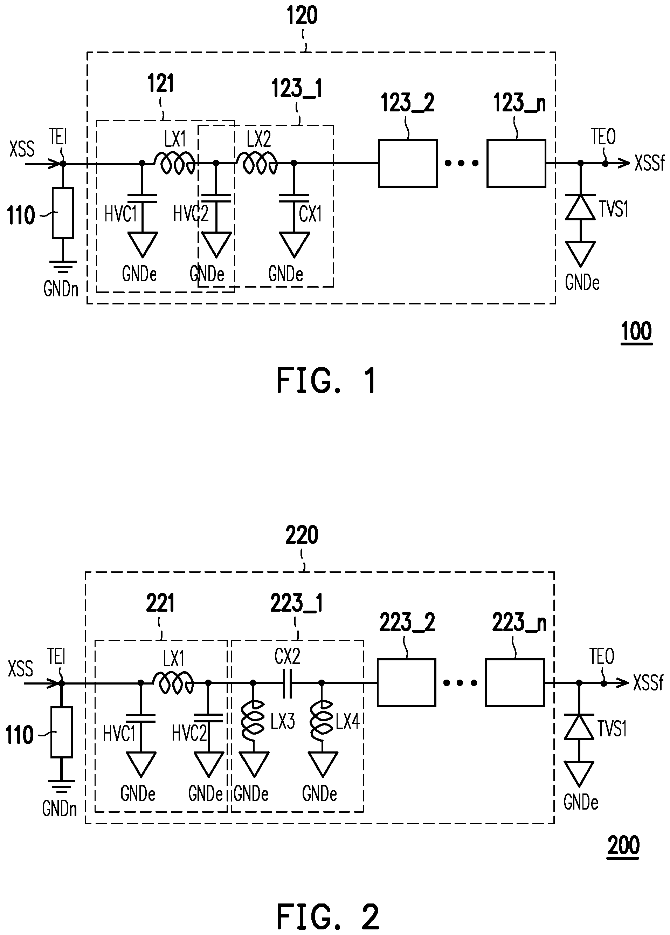

FIG. 1 illustrates schematic diagram of a filter circuit according to a first embodiment of the disclosure. With reference to FIG. 1, in the present embodiment, the filter circuit 100 includes a signal input terminal TEI, a gas discharging tube (GDT) 110, a filter 120, a TVS diode TVS1, and a signal output terminal TEO. The signal input terminal TEI is configured to receive a communication signal XSS. Here, the communication signal XSS is, for instance, a wired signal or a wireless signal. The wired signal is, for instance, a cable signal, and the wireless signal is, for instance, a satellite signal.

The gas discharging tube 110 is coupled between the signal input terminal TEI and a natural ground terminal GNDn and is configured to form a discharging path of a surge to the ground in the filter circuit 100. The filter 120 is coupled between the signal input terminal TEI and the signal output terminal TEO to filter the communication signal XSS received by the signal input terminal TEI and provide the filtered communication signal XSSf to the signal output terminal TEO. The TVS diode TVS1 is coupled between the signal output terminal TEO and the electronic ground terminal GNDe and is configured to form another discharging path of the surge to the ground in the filter circuit 100.

The signal output terminal TEO is configured to provide the filtered communication signal XSSf to the next-stage circuit. The aforesaid next-stage circuit may be a receiver, a decoder, etc., which may be determined according to the circuit design.

The filter 120 is exemplified by a low pass filter here and includes a first sub-filter 121 and at least one second sub-filter (e.g., 123_1-123_n), and the first sub-filter 121 and the at least one second sub-filter (e.g., 123_1-123_n) are exemplified by low pass filters, where n is a positive integer greater than 0. The first sub-filter 121 and the at least one second sub-filter (e.g., 123_1-123_n) are connected in series between the signal input terminal TEI and the signal output terminal TEO.

The first sub-filter 121 includes a first high voltage capacitor HVC1, a filter inductor LX1, and a second high voltage capacitor HVC2. A first terminal of the first high voltage capacitor HVC1 is coupled to the signal input terminal TEI, and a second terminal of the first high voltage capacitor HVC1 is coupled to the electronic ground terminal GNDe. A first terminal of the second high voltage capacitor HVC2 is coupled to the signal output terminal TEO, and a second terminal of the second high voltage capacitor HVC2 is coupled to the electronic ground terminal GNDe. The filter inductor LX1 is coupled between the first terminal of the first high voltage capacitor HVC1 and the first terminal of the second high voltage capacitor HVC2 and is equivalent to being coupled between the signal input terminal TEI and the signal output terminal TEO.

The second sub-filter (taking the second sub-filter 123_1 directly neighboring the first sub-filter 121 as an example) and the first sub-filter 121 commonly use (or share) the second high voltage capacitor HVC2, and the second sub-filter 123_1 further includes a filter inductor LX2 and a filter capacitor CX1. A first terminal of the filter capacitor CX1 is coupled to the signal output terminal TEO through other second sub-filters (e.g., 123_2-123_n), and a second terminal of the filter capacitor CX1 is coupled to the electronic ground terminal GNDe. The filter inductor LX2 is coupled between the first terminal of the second high voltage capacitor HVC2 and the first terminal of the filter capacitor CX1.

Here, the breakdown voltage of the first high voltage capacitor HVC1 and the second high voltage capacitor HVC2 is greater than 250 volts, whereby one more discharging path of the surge to the ground is further formed. The breakdown voltage of the filter capacitor CX1 is about tens of volts (for example, 25 volts or 50 volts).

In the present embodiment, the electronic ground GNDe is designed as a ground planar electrode; that is, the ground terminal is an electrode occupying a large area. Namely, if the electronic ground terminal GNDe has sufficient discharging capabilities, the electrode pattern of the electronic ground terminal GNDe may not be limited, and the type of the signal input terminal TEI may depend on the circuit design. Besides, the signal input terminal TEI may be an F connector or an ICE connector, but the type of the signal input terminal TEI is determined by the signal to be received, which is not limited to those described in one or more embodiments herein.

On the other hand, the first sub-filter 121 is the first sub-filter from the signal input terminal TEI, for instance; in other embodiments, the first sub-filter 121 may be between any two of the second sub-filters 123_1-123_n or between the second sub-filter 123_n and the signal output terminal TEO. In other words, the first sub-filter 121 and the at least one second sub-filter (e.g., 123_1-123_n) directly neighboring the first sub-filter 121 may share the first high voltage capacitor HVC1 and/or second high voltage capacitor HVC2 according to the circuit design.

Moreover, the TVS diode TVS1 is disposed close to the signal output terminal TEO; however, in other embodiments, the TVS diode may be disposed at any location in the first sub-filter 121 and the at least one second sub-filter (e.g., 123_1-123_n) according to the circuit design and should not be construed as a limitation in the disclosure. Besides, according to the circuit design, if it is not difficult to meet the anti-surge requirement, the TVS diode TVS1 may be omitted.

FIG. 2 illustrates schematic circuitry of a filter circuit according to a second embodiment of the disclosure. With reference to FIG. 1 and FIG. 2, the filter circuit 200 is basically the same as the filter circuit 100, while the difference therebetween lies in the filter 220. Here, the same or similar elements in FIG. 1 and FIG. 2 are marked by the same or similar reference numbers. In the present embodiment, the filter 220 is coupled between the signal input terminal TEI and the signal output terminal TEO and configured to filter the communication signal XSS received by the signal input terminal TEI and provide the filtered communication signal XSSf to the signal output terminal TEO.

The filter 220 is exemplified by a band pass filter and includes a first sub-filter 221 and at least one second sub-filter (e.g., 223_1-223_n), the first sub-filter 221 is exemplified by a low pass filter, and the at least one second sub-filter (e.g., 223_1-223_n) at least includes a high pass filter (e.g., 223_1). The first sub-filter 221 and the at least one second sub-filter (e.g., 223_1-223_n) are connected in series between the signal input terminal TEI and the signal output terminal TEO.

The first sub-filter 221 is the same as the first sub-filter 121, and therefore one may refer to the description of the first sub-filter 121 provided in the embodiment depicted in FIG. 1. The second sub-filter as the high pass filter (exemplified by the second sub-filter 223_1 directly neighboring the first sub-filter 221) includes the filter inductors LX3 and LX4 and the filter capacitor CX2. A first terminal of the filter inductor LX3 is coupled to the signal input terminal TEI through the first sub-filter 221 and a second terminal of the filter inductor LX3 is coupled to the electronic ground terminal GNDe. A first terminal of the filter inductor LX4 is coupled to the signal output terminal TEO through other second sub-filters (e.g., 223_2-223_n), and a second terminal of the filter inductor LX4 is coupled to the electronic ground terminal GNDe. The filter inductor CX2 is coupled between the first terminal of the filter inductor LX3 and the first terminal of the filter inductor LX4.

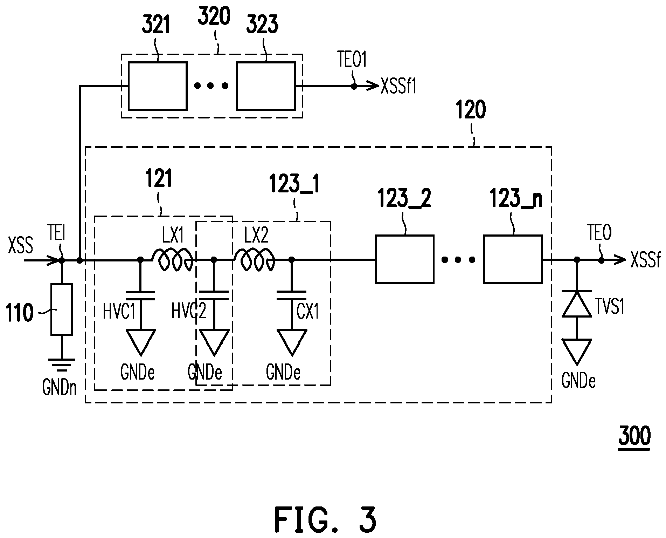

FIG. 3 illustrates schematic circuitry of a filter circuit according to a third embodiment of the disclosure. With reference to FIG. 1 and FIG. 3, the filter circuit 300 is basically the same as the filter circuit 100, while the difference therebetween lies in the filter 320 and the signal output terminal TEO1. Here, the same or similar elements in FIG. 1 and FIG. 3 are marked by the same or similar reference numbers.

In this embodiment, the filter 320 is coupled between the signal input terminal TEI and the signal output terminal TEO1 and configured to filter the communication signal XSS received by the signal input terminal TEI and provide another filtered communication signal XSSf1 to the signal output terminal TEO1. The filter 320 includes a first sub-filter 321 and at least one second sub-filter 323. The signal output terminal TEO1 is configured to provide the filtered communication signal XSSf1 to the next-stage circuit.

Here, the filter 320 may be the filter 120 shown in FIG. 1 or the filter 220 shown in FIG. 2; namely, the filtered communication signal XSSf1 may be the same as or different from the filtered communication signal XSSf, which may depend on the circuit design and should not be construed as a limitation in the disclosure. Further, the first sub-filter 321 may be referenced to the first sub-filter 121 or 221, and the at least one second sub-filter 323 may be referenced to the second sub-filters 123_1-123_n or 223_1-223_n.

To sum up, in the filter circuit provided in one or more embodiments, a first discharging path of the surge to the ground is formed through the gas discharging tube, and a second discharging path of the surge to the ground is formed through the high voltage capacitors. Through multiple discharging paths, the surge problems may be effectively solved. Furthermore, a third discharging path of the surge to the ground in the filter circuit may be formed by the TVS diode, so as to enhance the anti-surge capabilities.

## Claims

1. A filter circuit (100, 200, 300) comprising:
a signal input terminal (TEI) configured to receive a communication signal (XSS);
a gas discharging tube (110) coupled between the signal input terminal (TEI) and a natural ground terminal (GNDn);
at least one signal output terminal (TEO, TEO1) configured to output the communication signal (XSSf, XSSf1) which is filtered; and
at least one filter (120, 220, 320) coupled between the signal input terminal (TEI) and the corresponding signal output terminal (TEO, TEO1), the at least one filter (120, 220, 320) comprising a first sub-filter (121, 221, 321), the first sub-filter (121, 221,321) comprising:
a first high voltage capacitor (HVC1) coupled between the signal input terminal (TEI) and an electronic ground terminal (GNDe);
a second high voltage capacitor (HVC2) coupled between the corresponding signal output terminal (TEO, TEO1) and the electronic ground terminal (GNDe); and
a filter inductor (LX1) coupled between the signal input terminal (TEI) and the corresponding signal output terminal (TEO, TEO1).

2. The filter circuit (100, 200, 300) as recited in claim 1, wherein a breakdown voltage of the first high voltage capacitor (HVC1) and the second high voltage capacitor (HVC2) is greater than 250 volts.

3. The filter circuit (100, 200, 300) as recited in claim 1, or 2, wherein the at least one filter (120, 220, 320) further comprises a transient voltage suppressor diode (TVS1) coupled to the corresponding signal output terminal (TEO, TEO1) and the electronic ground terminal (GNDe).

4. The filter circuit (100, 200, 300) as recited in claim 1,2, or 3, wherein the at least one filter (120, 220, 320) further comprises at least one second sub-filter (123_1∼123_n, 223_1∼223_n, 323), and the first sub-filter (121, 221, 321) and the at least one second sub-filter (123_1∼123_n, 223_1∼223_n, 323) are connected in series between the signal input terminal (TEI) and the at least one signal output terminal (TEO, TEO1) corresponding to the signal input terminal (TEI).

5. The filter circuit (100, 200, 300) as recited in claim 4, wherein the at least one second sub-filter (123_1∼123_n, 223_1∼223_n, 323) is a low pass filter or a high pass filter.

6. The filter circuit (100, 200, 300) as recited in claim 5, wherein if the at least one second sub-filter (123_1) adjacent to the first sub-filter (121) is the low pass filter, the first sub-filter (121) and the at least one second sub-filter (123_1) adjacent to the first sub-filter (121) share the first high voltage capacitor (HVC1) or the second high voltage capacitor (HVC2).

7. The filter circuit (100, 200, 300) as recited in claim 1, 2, 3, or 4, wherein the electronic ground terminal (GNDe) is a ground planar electrode.

8. The filter circuit (100, 200, 300) as recited in claim 1,2, 3, 4, or 7, wherein the signal input terminal (TEI) is an F connector or an IEC connector.
